# EUROPEAN PATENT APPLICATION

(11) **EP 2 684 489 A1**
(43) Date of publication of application: **15.01.2014**
(21) Application number: 13397525.0
(22) Date of filing: 05.07.2013
(51) Int. Cl.: A47B 23/04, F16M 11/10, F16M 11/20, F16M 13/00

(54) **Holder for a computer**

(30) Priority: 10.07.2012 FI 20125788
(71) Applicant: Aidine Oy, 33100 Tampere (FI)
(72) Inventor: Nyblom, Henna-Mari, 37120 Nokia (FI)
(74) Representative: Tampereen Patenttitoimisto Oy

(57) **Abstract**

The invention relates to a holder for using and storing a computer, comprising a fastening part (1) for fastening the holder to a piece of furniture, a cradle part (2) for receiving the computer, with which the holder is intended to be used, in such a way that in use, the cradle part is underneath the fastening part, and in which the cradle part is configured to be tilted with respect to the fastening part, and devices (13, 23) for limiting the tilt of the cradle part with respect to the fastening part. The holder has a closed position, in which the computer is configured to lie on top of the cradle part in such a way that said computer can be stored underneath said piece of furniture; and a use position, in which the cradle part is configured to remain in the tilted position with respect to the fastening part in such a way that said computer can be used.

## Description

### Field of the invention

The invention relates to a holder intended for a computer, particularly a holder to be fastened to furniture intended for a tablet computer.

### Background of the invention

Various portable computers have become very common, and they are increasingly used for various tasks for which a computer was not used before. For example, in the kitchen, cooking can be assisted by using a tablet computer (for example, iPad) with a touch screen, or a lightweight portable PC with a keyboard and a screen. It is easy to check, for example, recipes from the computer. In other environments as well, for example in a car repair shop or other workshop environments, work can be facilitated by using computers.

In many environments, the use of computers can be hindered by the presence of moisture or liquids, dust, or even chemicals, for example oil or other substances which may damage the computer. Thus, it may not necessarily be possible or safe to use the computer for example in such a way that the computer is held on a table or in a holder on a table during working.

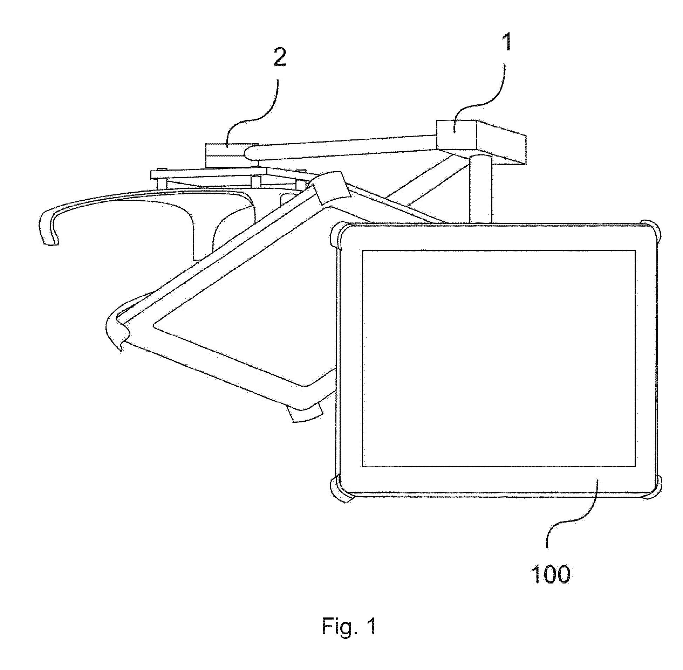

For this purpose, computer holders are available which can be fastened to furniture in the work environment in such a way that e.g. a tablet computer does not need to be on a table during working, but it can be safely in its own holder. For example, Griffin Technology makes a tablet computer holder with the trade name Cabinet Mount (Fig. 1), which is attached by its fastening element 1 to the lower surface of a kitchen cabinet. This holder can also be used to tuck the tablet computer 100 under the cabinet when it is not needed. For this purpose, the cradle part 2 is arranged to be pivoted with respect to the fastening part.

In connection with the invention, however, it has been found that the computer holders of the state of the art are insufficient with respect to e.g. ergonomics, usability or safety. Consequently, a better holder for a tablet computer is needed.

### Brief summary of the invention

The invention relates to a computer holder in which the cradle part, in which the computer is placed, is arranged to be pivotable with respect to the fastening part, by which the holder can be mounted on furniture, and the computer holder comprises devices for limiting the tilt (for example, an angle less than 90 degrees) with respect to the fastening part, wherein the computer holder provides a good viewing angle for the computer. These devices can comprise, for example, a lug, a surface or a horn in or in connection with the cradle part; a stopper for example in a hinge between the cradle part and the fastening part; or a stopper, a lug or a horn in the fastening part so that these devices prevent the opening of the cradle part with respect to the fastening part.

In the invention, the cradle part and the fastening part can be arranged to swivel with respect to each other by at least one hinge or joint, and said at least one hinge or joint can be arranged to be movable with respect to the fastening part, for example in such a way that the hinge pin is movable in a groove in the fastening part, for example in a direction substantially transverse to the axis of the hinge. In this way, the cradle part can be moved forward and backward with respect to the fastening part, the cradle part simultaneously remaining at a suitable viewing angle with respect to the fastening part. Such a movable hinge can also be provided with at least one locking pin or other projection or the like, and the fastening part can be provided with a suitable stopper for preventing the movement of the cradle part too far back in the open use position and simultaneously allowing the movement of the cradle part all the way back when the locking pin is fitted in the respective groove in the fastening part and the cradle part is in the closed position with respect to the fastening part. Such a sliding closing mechanism can be configured in such a way that the fastening part widens in a wedgelike manner rearward, wherein the sliding of the cradle part rearward in the closed position also lowers the cradle part in the earth's gravitational field, and the cradle part is easy to close, and it is also reliably held in the closed position by gravity. The cradle part can be provided with a handle, a notch or a groove for facilitating the moving.

The fastening part of the holder can also be configured as a housing, wherein by pushing the cradle part to the closed position, the computer placed in the cradle part will be enclosed in the housing. The front edge of the cradle part may be fitted tightly in the opening of the housing-like fastening part, and the housing-like fastening part can also be arranged to be locked in such a way that the cradle part and the computer cannot be pulled out without opening the lock. The fastening part can be fastened to a piece of furniture, for example the lower surface of a kitchen cabinet, the lower surface of a table, or the surface of another piece of furniture. The mounting can be arranged to be substantially permanent, for example by means of screws, or the fastening part can be fastened in a removable way. The removable housinglike fastening part can be used as a portable case for the tablet computer. The fastening part can also be fastened to the piece of furniture in a movable way, for example in such a way that the fastening part comprises a fastening element compatible with a fixing rail, wherein the holder can be moved, for example, in the lateral direction forward from below a kitchen cabinet.

The invention relates to what is defined in the independent claims. Embodiments of the invention are defined in the dependent claims.

### Description of the drawings

In the following, the invention will be described with reference to the figures, in which
- Fig. 1: shows a computer holder according to the state of art,
- Figs 2a, 2b and 2c: show a computer holder according to an embodiment of the invention,
- Figs. 3a and 3b: show a computer holder according to an embodiment of the invention,
- Figs. 4a, 4b, 4c, and 4d: illustrate structures, parts, and the operation of a computer holder according to an embodiment of the invention,
- Figs. 5a, 5b, and 5c: show a housing-like computer holder according to an embodiment of the invention,
- Figs. 6a and 6b: show a housing-like computer holder according to an embodiment of the invention, and
- Fig. 7: illustrates a situation of using a computer holder according to an embodiment of the invention.

In the figures, parts of the holder according to the invention are indicated with reference numerals, and the same reference numeral corresponds to the same part.

### Detailed description of the invention

Figure 1 shows a computer holder according to the state of art, comprising a fastening part 1 for attaching the holder to a piece of furniture, and a cradle part 2 fixed to it in a tiltable manner for fastening a tablet computer 100. The holder is attached to the lower surface of a piece of furniture, such as a kitchen cabinet, wherein the cradle part is underneath the fastening part when in the use position. By gravity, the cradle part and the computer tend to be tilted further with respect to the fastening part, wherein the cradle part tends to assume the greatest angle of tilt (90 degrees with respect to the lower surface of the cabinet and the fastening part).

In connection with and as part of the invention, it has been found that such a tiltable holder according to the state of art does not provide a possibility for an ergonomic way of working, because the computer tends to be upright even if the computer is typically viewed obliquely from above, because of the lowness of the fastening point.

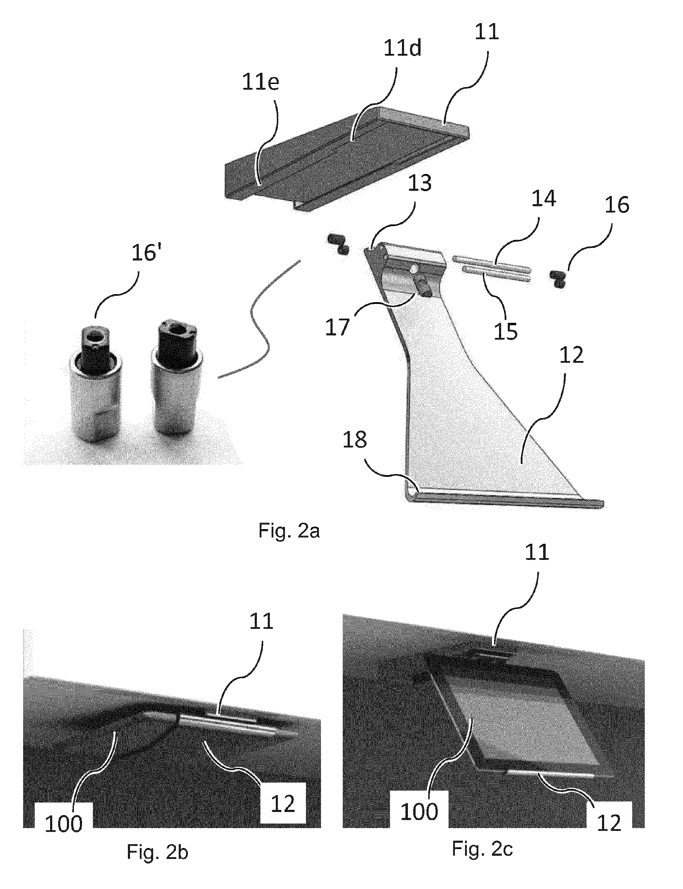

Figures 2 to 7 show some arrangements according to the invention, where the holder comprises devices 13, 23 for limiting the tilt of the cradle part 12, 22 with respect to the fastening part 11, 21. In this way, the cradle part 12, 22 is brought firmly to such a position that the display of the computer (e.g. tablet computer) placed in it can be looked at in an ergonomic way. In the case of a tablet computer it is also important that the touch screen is easy to use, and this is enabled by the invention.

The cradle part 12, 22 can comprise a lug, a surface or a horn 13 that is arranged to be supported to the fastening part 11, 21 in such a way that it limits the tilt of the cradle part 12, 22 in the use position of the holder. In other words, when the cradle part 12, 22 tends, by the effect of gravity, to tilt further (towards the vertical position), the lug, surface or horn 13 meets the fastening part 11, 21, and the tilting of the cradle part 12, 22 is prevented.

In an embodiment, the fastening part 11, 21 comprises a lug, a surface or a horn, or another device 23 arranged to be supported to the cradle part 12, 22 in such a way that it limits the tilt of the cradle part 12, 22 in the use position of the holder.

Figure 2a shows a holder according to the invention, comprising a fastening part 11 and a cradle part 12. In the rear 11e of the fastening part 11, a groove is provided, in which a locking pin 15 can be engaged and along which a hinge 14 is movable forward and backward (substantially transversely to the axis of the hinge 14). This makes it possible to push the computer under a piece of furniture also in the use position, wherein the computer can be slightly pushed out of the way, to facilitate working. In the front 11 d of the fastening part 11, the groove is lower, wherein the locking pin can also be engaged in the groove just behind the frontmost position. As shown in Fig. 2a, the locking pin 15 can be engaged in the groove 11e clearly forward of the rearmost position, for example 1/2 or 1/3 of the length of the groove, seen from the front of the fastening part. In the use position, the horn 13 is supported to the lower surface of the fastening part 11, wherein the cradle part 12 cannot tilt further from the ergonomic position. The tilt can also be adjusted by changing the length of the horn 13, and the horn 13 can also be adjustable. The horn 13 can also be part of the supporting surface, by which the cradle part is supported to the fastening part. The horn 13 is thus formed by the edge of this supporting surface. The supporting surface can be fastened to the fastening part in a movable way, for example by clamping screws, wherein the ergonomic angle of viewing in the use position can also be adjusted by changing the angle of fastening the supporting surface to the fastening part. At their ends, the hinge and the locking pin can comprise bushings 16 which render the movement of the cradle part convenient. Rotary dampers 16' can also be used for this purpose, wherein the tilt is restrained so that the computer does not tend to bounce off the holder when the holder is opened; and the tilting of the cradle part towards the closed position after pressing keys or touching the touch screen can also be prevented, whereby the use of the computer in the holder can be more convenient. The computer 100 can be fastened at its top to the cradle part 12 by means of a spring pin 17 or another locking element. The bottom 18 of the cradle part 12 is configured in the shape of a claw, and its shape can accurately match the tablet computer suitable for it, wherein the computer remains firmly in place. An advantage obtained with this is, for example, that the computer will not sway or bounce in the holder as a result of pressing the keys. If the cradle part 12 is narrower than the computer 100, such matching of the shape of the cradle part as well as the possible spring pin 17 for locking the computer in the cradle part 12 can, for example, prevent the computer from falling off the cradle when the computer is pressed at its right or left edge with a finger.

Figure 2b shows the holder in the closed position, wherein the computer 100 lies on top of the cradle part 12, concealed under a piece of furniture. This is advantageous in terms of safety, because the computer cannot easily fall off the cradle part 12, as may be the case in the arrangement according to the state of art, in which the computer is under the cradle part. Figure 2c shows the same holder in the use position. The cradle part 12 may be narrower than the computer 100 with which the holder is configured to be used. If the cradle part 12 is narrower than the computer 100, the cradle part 12 can be formed to be light-weight. If the cradle part 12 is narrower than the computer 100, the size of the computer 100 does not technically restrict the form of the cradle part 12. In this case, the cradle part 12 can be designed to be visually attractive, which may be important in interior design. If the cradle part 12 is narrower than the computer 100, a variety of computers 100 can be fitted in the cradle part 12 without having to change the width of the cradle part 12. In other words, the dimensions of the cradle part 12 do not need to be fitted to the dimensions of the computer 100. The cradle part 12, 22 can comprise a notch, a groove, or a handle for gripping, wherein the cradle part 12, 22 can be more easily pulled out to the use position.

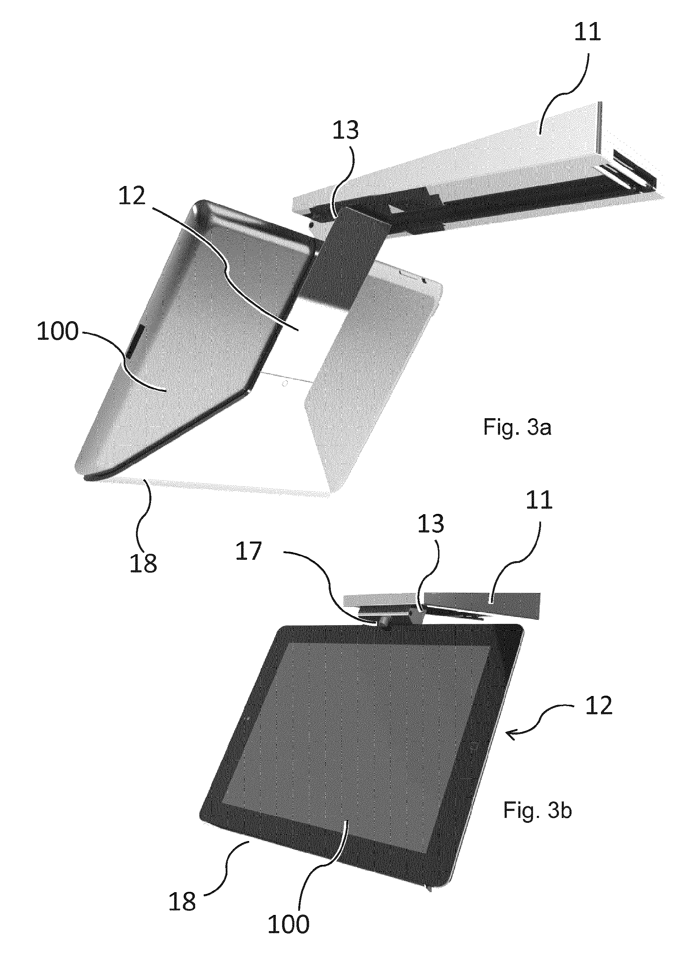

Figures 3a and 3b show the holder in the use position, wherein a horn 13 is supported to the bottom of a sliding groove in the lower surface of the fastening part 11. Consequently, the holder comprises at least one hinge or joint 14, 24 for tilting the cradle part 12, 22 with respect to the fastening part 11, 21, and this hinge or joint 14, 24 is configured to be movable with respect to the fastening part 11, 21 in a direction substantially transverse to the rotational axis of the hinge or joint.

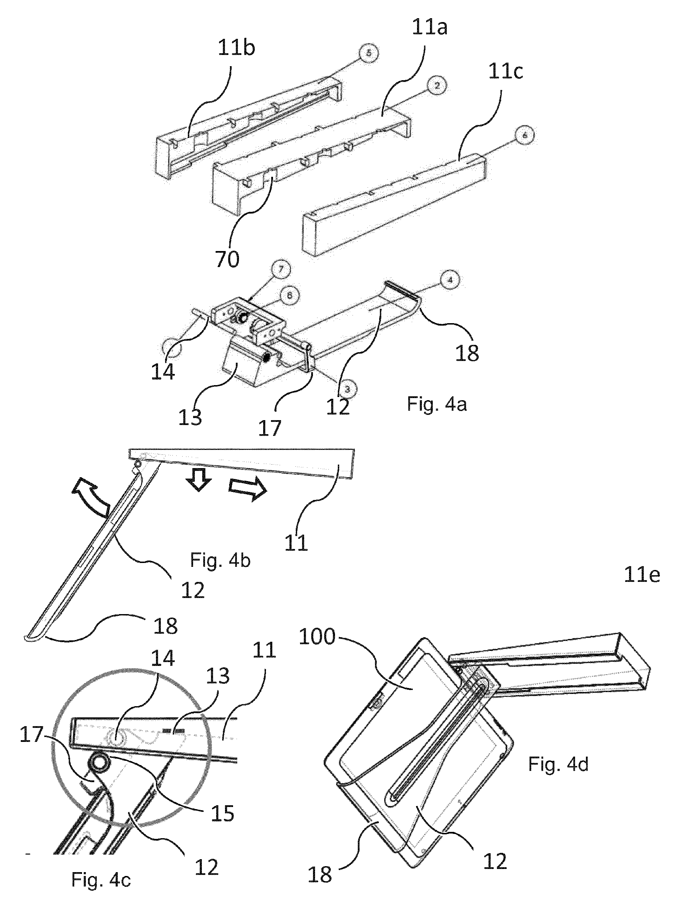

Figure 4a shows the structure of a holder according to an embodiment. Here, the fastening part 11 consists of parts 11 a, 11 b and 11c which can be connected when assembling the holder, wherein the hinge 14 of the cradle part 12 is engaged in the groove of the fastening part. The fastening part 11 can be mounted on a piece of furniture with e.g. screws through screw chucks 70. The cradle part 12 comprises a surface 13 which is configured to be supported to the fastening part 11, for limiting the tilt. The cradle part also comprises a locking part 17 for securing the computer 100. As mentioned above, the cradle part 12 can be narrower than the computer 100, and thus the fastening part 11 can also be made relatively narrow compared with the arrangements of the state of art. Consequently, the fastening part 11 can also be narrower than the computer 100. This may facilitate the mounting of the fastening part on the lower surface of the piece of furniture. If the cradle part 12 is narrower than the computer 100, the holder can, in the closed position, take only a little space on the lower surface of the piece of furniture.

In this way, it is easier to place, in addition to the holder, for example light fittings on the lower surface of the piece of furniture without the holder being in the way.

Figure 4b shows the structure of a holder according to an embodiment. The cradle part can be turned to the closed position, parallel to the fastening part, wherein the locking pin 15 is engaged in the groove of the fastening part. By the effect of gravity (arrow down), the cradle part 12 tends to remain in the rear of the fastening part 11.

Figure 4c shows the operation of a hinge 14 and a horn 13 of a holder according to an embodiment. After the hinge 13 has pivoted to a sufficient extent so that the tilt of the cradle part 12 with respect to the fastening part 11 is suitable, the horn 13 hits the fastening part 11 and is supported to it, wherein the hinge cannot pivot any further and the tilt of the cradle part 12 is restricted. As stated above, the holder can also comprise a locking member 15 for locking the cradle part 12 to the closed position with respect to the fastening part 11, for example in such a way that the locking member 15 is configured to be engaged in the locking groove 11e of the fastening part 11 when the cradle part 12 is pushed, in the closed position, back with respect to the fastening part 11.

Figure 4d shows a holder according to an embodiment. The fastening part 11 of the holder becomes wider towards the rear, or the rear of the fastening part 11 is otherwise arranged to extend further down than the front of the fastening part 11, wherein the cradle part 12 is, in use, configured to be held in the closed position in the rear of the fastening part 11 by gravity. The cradle part 12 is also configured to lock in the closed position after it has been tilted to the closed position in the front 11 d of the fastening part 11, wherein a locking pin 15 is engaged in the locking groove 11e of the rear part.

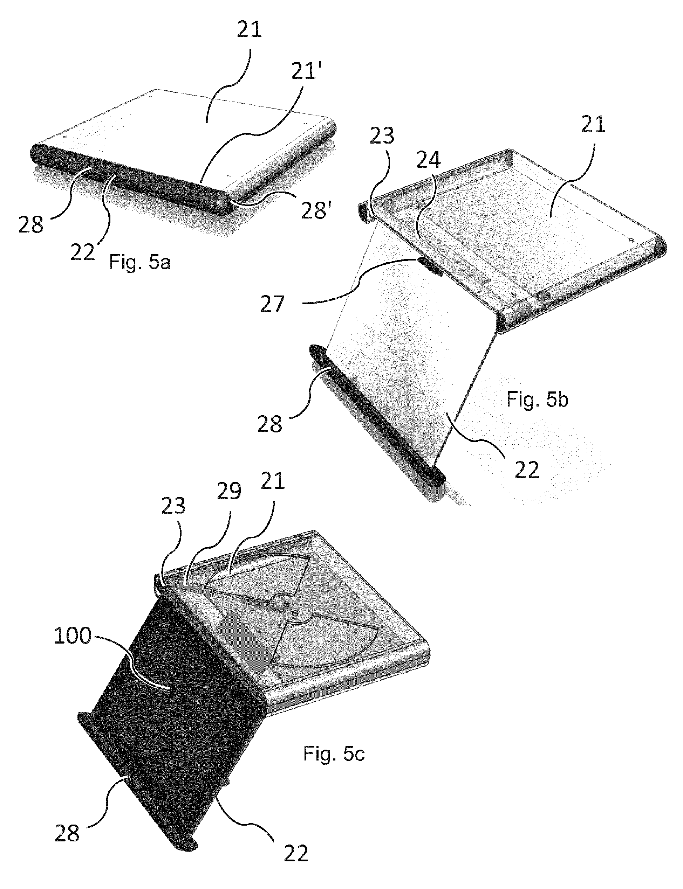

Figure 5a shows a holder according to an embodiment, in which the fastening part 21 is configured as a housing so that in the closed position, the cradle part 22 and the computer 100 are configured to fit inside the fastening part 21, for example in such a way that the edge 28' of the bottom 28 of the cradle part 22 is configured to fit the edge 21' of the front of the fastening part 21. The housing-like fastening part 21 provides, for example, the advantage that the computer is protected as the housing prevents the entry of liquid, dust, vapour, and dirt into the computer. In this way, the computer can be kept clean in the holder for longer times.

Such a housing-like holder can also be arranged to be removable from the piece of furniture by using, for example, screws and corresponding slots in the fastening part for fixing, wherein the fastening part can be removed from the piece of the furniture without unscrewing the screws. Thus, the fastening part 21 is configured to be fastened to the piece of furniture in a removable way, wherein the fastening part 21 removed from the piece of furniture constitutes a protective housing for the computer 100. For this purpose, the holder may be provided with a carrying handle or a place for it, or a carrying strap or a place for it. The housing-like holder (as well as the holder of Fig. 2) can also be provided with a lock to be locked with a key or a number code or electronically, wherein the computer can only be accessed by an authorized user.

Figure 5b shows a housing-like holder, in which the cradle part 22 is wide and supports the whole rear part of the computer. The cradle part comprises a locking element 27 by which the computer can be secured to the cradle part. The bottom 28 is provided with a groove for receiving the edge of the computer.

In Fig. 5c, the housing-like holder comprises a spring 29 between the fastening part 21 and the cradle part 22, wherein the cradle part can be held firmly in either the closed position or the open position. This functionality partially corresponds to the possibility of placing the rear of the fastening part lower than its front. By either way, the cradle part can be held firmly in the closed position in the rear of the fastening part.

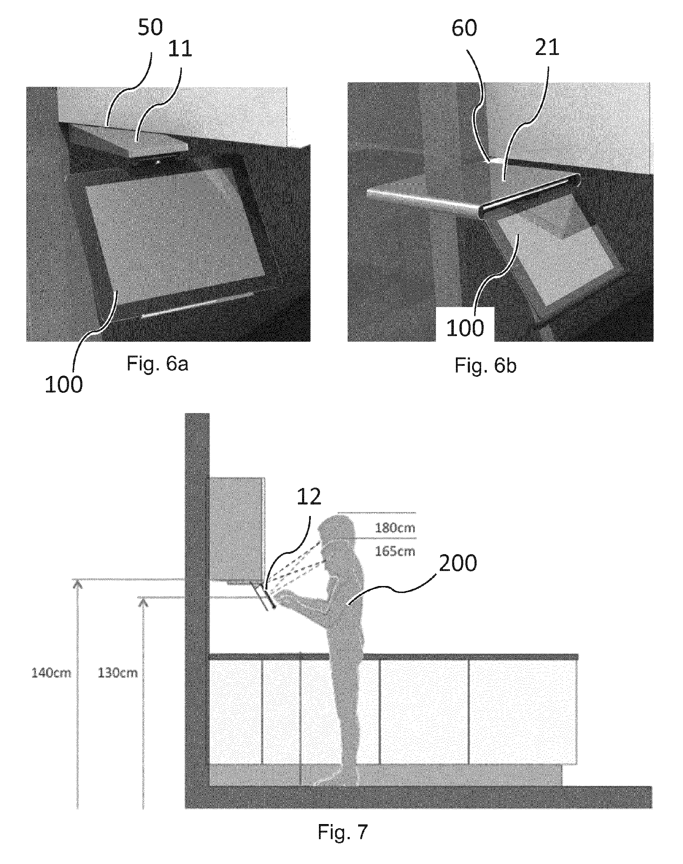

Figure 6a shows a holder according to an embodiment, in which the fastening part 11, 21 comprises a hinge 50 or is configured to engage with a hinge 50 (the hinge can also be fixed to the piece of furniture) so that the fastening part 11, 21 is configured to pivot in relation to the piece of furniture, on which the fastening part 11, 21 has been mounted.

Figure 6b shows a holder according to an embodiment, in which the fastening part 11, 21 comprises a slide bar 60 or is configured to engage with a slide bar 60 so that the fastening part 11, 21 is configured to move along the slide bar with respect to the piece of furniture, on which the fastening part 11, 21 has been mounted.

In the ways according to Figs 6a and 6b, the advantage is achieved that the holder can also be fastened partly or completely laterally under the piece of furniture, wherein it can be turned or pulled out before the holder is opened by pulling out the cradle part 12, 22.

Figure 7 shows the use of the holder according to the invention for working in an ergonomic position. Presumably, the user's height is usually between 165 cm and 180 cm, and the height level for installing the computer is, in furniture with normal dimensions, about 130 to 140 cm, wherein the computer is viewed obliquely from above. The advantage of the solution according to the invention is to provide an ergonomic viewing angle when the tilt of the cradle part 12, 22 (or the display of the computer supported by the cradle part) with respect to the fastening part (or the lower surface of the piece of furniture, i.e. the horizontal plane) is, for example, 50 to 80 degrees, such as 60 degrees. Consequently, the cradle part is stopped before it reaches, by the effect of gravity, an angle of 90 degrees or close to it with respect to the fastening part or the horizontal plane. In addition to ergonomics, the advantage can be achieved that the computer is above the cradle part in both the closed position and the use position, as seen e.g. in Fig. 4d, wherein the cradle part can support the computer from below, preventing it from falling off. It should be noted that the support can also be configured in such a way that the cradle part opens so that the computer is below the cradle part and the cradle part stops at an angle of, for example, 100 to 130 degrees, for example 120 degrees, with respect to the fastening part or the lower surface of the piece of furniture (the horizontal surface). Obviously, the lower surface of the piece of furniture can also extend in a direction different from the horizontal. Substantially, a connection is provided between the cradle part and the fastening part, for stopping the cradle part in an ergonomic position before it reaches a freely suspending position in the gravitational field.

It is obvious that the invention can be applied in various uses. As an example, the fastening of a holder according to the invention to the lower surface of a kitchen cabinet has been presented, but the holder can be fastened to the lower surface of a different piece of furniture as well, for example to the lower surface of a shelf or a table, or to a suitable surface of an apparatus or a means of transport. The holder according to the invention can also be integrated in another device, piece of furniture or building, such as a piece of kitchen fittings, an automobile or a boat, or a building. Consequently, the examples presented do not in any way limit the scope of the invention, but the scope of the invention is defined by the appended claims.

## Claims

1. A holder for using and storing a computer, comprising:
- a fastening part (1, 11, 21) for fastening the holder to a piece of furniture,
- a cradle part (2, 12, 22) for receiving the computer, with which the holder is intended to be used, in such a way that in use, the cradle part (2, 12, 22) is underneath the fastening part (1, 11, 21), and in which the cradle part (2, 12, 22) is configured to be tilted with respect to the fastening part (1, 11, 21);
- devices (13, 23) for limiting the tilt of the cradle part (12, 22) with respect to the fastening part (11, 21);
- a closed position, in which the computer is configured to lie on top of the cradle part (2, 12, 22) in such a way that said computer can be stored underneath said piece of furniture; and
- a use position, in which the cradle part is configured to remain in the tilted position with respect to the fastening part in such a way that said computer can be used;
**characterized in that**
- the cradle part (2, 12, 22) is narrower than said computer.

2. The holder according to claim 1, in which the shape of said cradle part matches the computer, for holding the computer firmly in place when the computer is used.

3. The holder according to claim 1 or 2, comprising a spring pin or another locking element for locking the computer in the cradle part for holding the computer firmly in place when the computer is used.

4. The holder according to any of the preceding claims, in which the fastening part (21) is configured as a housing in such a way that in the closed position, the cradle part (22) and the computer (100) are arranged to fit in the fastening part (21) so that the front edge (28') of the cradle part (22) is configured to fit tightly in an opening (21') in the housing-like fastening part (21).

5. The holder according to claim 4, in which the fastening part (21) is configured to be fastened to the piece of furniture in a removable way, wherein the fastening part (21) removed from the piece of furniture constitutes a protective housing for the computer (100).

6. The holder according to claim 4 or 5, in which the cradle part can be locked in the closed position by means of a lock.

7. The holder according to any of the preceding claims, in which the fastening part (11, 21) comprises a hinge (50) or a slide bar (60) or is configured to be engaged in a hinge (50) or a slide bar (60) in such a way that the fastening part (11, 21) is configured to move with respect to the piece of furniture, to which the fastening part (11, 21) has been fastened.

8. The holder according to any of the preceding claims, in which the cradle part (12, 22) comprises a lug, a surface or a horn (13) that is configured to be supported to the fastening part (11, 21) in such a way that it limits the tilt of the cradle part (12, 22) in the use position of the holder.

9. The holder according to any of the preceding claims, in which the fastening part (11, 21) comprises a lug, a surface or a horn (23) that is configured to be supported to the cradle part (12, 22) in such a way that it limits the tilt of the cradle part (12, 22) in the use position of the holder.

10. The holder according to any of the preceding claims, in which the fastening part (11) becomes wider towards the rear, or the rear of the fastening part (11) is otherwise configured to extend further down than the front of the fastening part (11), wherein the cradle part (12) is, in use, configured to be held in the closed position in the rear of the fastening part (11) by gravity.

11. The holder according to any of the preceding claims, comprising a locking device (15) for locking the cradle part (12) in the closed position with respect to the fastening part (11), the locking device (15) being configured to engage in a locking groove (11e) of the fastening part (11) clearly forward of the rearmost position when the cradle part (12) is pushed back, in the closed position, with respect to the fastening part (11).

12. The holder according to any of the preceding claims, in which the cradle part is provided with at least one rotary damper configured to damp the rotation of the cradle part with respect to the fastening part.

13. The holder according to any of the preceding claims, in which said fastening part (11) is narrower than said computer.
